# EUROPEAN PATENT APPLICATION

(11) **EP 1 480 233 A1**
(43) Date of publication of application: **24.11.2004**
(21) Application number: 03743065.9
(22) Date of filing: 28.02.2003
(51) Int. Cl.: H01C 7/00, H01B 1/22, C04B 41/86, C03C 8/04

(54) **RESISTOR**

(30) Priority: 28.02.2002 JP 2002101902; 28.02.2002 JP 2002101903; 28.02.2002 JP 2002101904; 17.02.2003 JP 2003079022
(71) Applicant: Kojima Chemicals Co., Ltd, Sayama-shi, Saitama 350-1335 (JP)
(72) Inventor: NISHINO, Atsushi, Neyagawa-shi, Osaka 572-0826 (JP); SHINDO, Yasuhiro, Katano-shi, Osaka 576-0021 (JP); SUDO, Yasuhiro, c/o KOJIMA CHEMICAL CO., LTD., Sayama-shi, Saitama 350-1335 (JP); IWASAKI, Masao, c/o KOJIMA CHEMICAL CO. LTD., Sayama-shi, Saitama 350-1335 (JP)
(74) Representative: Leson, Thomas Johannes Alois, Dipl.-Ing.
(86) International application number: PCT/JP2003/002322
(87) International publication number: WO 2003/073442

(57) **Abstract**

In order to obtain a resistor which is excellent in acid resistance by allowing a thick-film resistance body paste for use in a resistance body to be lead-free and is capable of simultaneously firing 3 layers of an electrode portion, a resistance portion and a surface coat portion all together at a time and can also contribute to global environment, provided is a resistor, having a substrate (1), a resistance body (3), an electrode (2) connected to the resistance body (3) and a precoat (4) covering the resistance body (3), in which a thick-film resistance body paste which contains, as main components, electrically conductive powder, a glass frit and an organic vehicle, in which the glass frit is constituted by a composition containing, in percentages by weight, 1% or less of alkali metal, from 10 to 30% of Bi₂O₃, from 25 to 40% of SiO₂, from 30 to 40% of BaO, from 5 to 7% of ZnO, from 4 to 7% of Al₂O₃ and from 0.01 to 8% of B₂O₃, and does not contain PbO is used for forming the resistance body002E

## Description

### TECHNICAL FIELD

The present invention relates to a printing-type thick-film resistor which is constituted by printing and, then, firing a resistance body paste, an electrically conductive paste and a precoat on a ceramic substrate in a predetermined pattern by means of a screen printing technique and, particularly, to a resistor using a thick-film resistance body paste using lead-free bismuth-based glass which is excellent in acid resistance as a glass frit, an electrically conductive paste and a precoat.

### BACKGROUND ART

A thick-film resistance body paste which has ordinarily been used is prepared by mixing electrically conductive fine powder, such as RuO₂ or pyrochlore-type lead ruthenate (Pb₂Ru₂O₇₋ₓ) and a glass frit with an organic vehicle and, then, kneading the resultant mixture by a 3-roll mill. The reason why pyrochlore-type lead ruthenate (Pb₂Ru₂O₇) is simultaneously used with RuO₂ is that, since pyrochlore-type lead ruthenate has a smaller temperature coefficient of resistance (TCR) than RuO₂, when RuO₂ is singly used in a small amount, a resistance value becomes unstable, in which pyrochlore-type lead ruthenate serves as stabilizing the resistance value.

As for the glass frit which serves as binder glass of a conventional thick-film resistance body paste, lead borosilicate-type glass, containing a large amount of PbO, which has a favorable compatibility with lead ruthenate and an extremely large effect in decreasing a melting point of glass is mainly used. The aforementioned lead borosilicate-type glass, which is low-melting-point glass, also has an advantage of being excellent in chemical resistance such as acid resistance.

At present, in a situation in which a global environmental protection is advocated and energy-saving, sustainable economic growth is raised, an electronic field has also entered into a stage in which an improvement measure is required to be surely taken.

A printing-type thick-film resistor, which is an electronic component, occupies a large portion in quantities of components to be used in electronic appliances. A thick-film resistance body paste is used for a resistance body material for the printing-type thick-film resistor and a lead borosilicate-type glass frit which contains a large amount of PbO is used in most of the paste.

On the other hand, recently, from the standpoint of the global environmental protection, a lead-free material or electronic component is required and, accordingly, an adoption of the glass frit, which does not contain PbO, in the thick-film resistance body paste to be used in the printing-type thick-film resistor has come to be required.

As for the glass frit which does not contain PbO, for example, bismuth borosilicate-type glass, zinc borosilicate-type glass and borate-type glass have been known. Although applications of these lead-free glass frits have also been tried, none of them was found satisfactory in an acid resistance test.

On the other hand, in a constitution of the printing-type thick-film resistor, since printing, drying and firing were conducted each time electrode forming, resistance forming and protective glass film forming were performed, the process becomes large and, accordingly, there was a problem also from the standpoint of energy-saving and cost reduction. For this account, a simultaneous firing method for the electrode forming, resistance forming and precoat film forming using the thick-film resistance body paste has also been tried; however, in the simultaneous firing method by using the conventional thick-film resistance body paste, cracking and the like were generated in a joint portion of an electrode portion and a resistance body portion particularly in a firing step and, accordingly, there was a quality problem.

About 7 years have passed since a lead-free solder was introduced; however, a lead-free resistor such as a chip-type fixed resistor has not been put in practical use and lead are in many cases used in the electrode, resistance body and precoat glass. Namely, the lead-type glass frit has been used in all of pastes for the electrode, resistance and precoat.

The present invention solves these problems and has an object to provide a resistor that uses binder glass which does not contain PbO, is excellent in acid resistance and can also contribute to a global environment as that for each of a thick-film resistance body paste, an electrode paste and a precoat.

As another object, provided are a thick-film resistance body paste, an electrode paste and a precoat which are each lead-free and allow 3 layers of an electrode portion, a resistance body portion and a precoat glass portion to be simultaneously fired and can contribute to a global environment and, also, a resistor using these pastes and the precoat.

As still another object, provided is a resistor, which is energy-saving taking an environment into consideration, low cost and high in reliability, in which glass for various types of pastes is allowed to be unleaded, new lead-less glass is synthesized and, while 3 layers of an electrode layer, a resistance layer and a precoat layer are conventionally subjected to printing to drying to firing three times (namely, a 3-coat-3-firing=3C3F method) to manufacture a chip-type fixed resistor, printing to air-drying to another printing to another air-drying to still another printing to still another air-drying to firing was conducted to continuously perform electrode forming and resistor forming and form surface covering layer of the resistor by means of print-forming and, then, fire-form them all together only once, namely, a 3-coat-1-fire method (that is, 3C1F method) is performed, to thereby substantially shorten the process.

### DISCLOSURE OF THE INVENTION

The present inventors have exerted various types of studies to attain the aforementioned objects and, as a result, found that, by using SiO₂-Bi-Ba-type lead-free non-alkali glass in which a content ratio of bismuth is allowed to be in a specified range as a thick-film resistance body paste and binder glass of precoat, an acid resistance can be excellent and an electrode portion, a resistance body portion and a surface coat portion can simultaneously be fired to achieve the present invention. Namely, the present invention comprises following inventions:
(1) a resistor, comprising a substrate, a resistance body, an electrode connected to the resistance body and a precoat covering the resistance body, and using a lead-free thick-film resistance body paste in which the resistance body is a thick-film resistance body paste comprising, as main components, electrically conductive powder, a glass frit and an organic vehicle, in which the glass frit is constituted by a composition comprising, in percentages by weight, 1% or less of alkali metal, from 10 to 30% of Bi₂O₃, from 25 to 40% of SiO₂, from 30 to 40% of BaO, from 5 to 7% of ZnO, from 4 to 7% of Al₂O₃ and from 0.01 to 8% of B₂O₃;
(2) the resistor as described in (1), using a thick-film resistance body paste in which the electrically conductive powder is RuO₂ and/or Bi₂Ru₂O₇₋ₓ;
(3) the resistor as described in (1), using a thick-film resistance body paste in which the electrically conductive powder is at least one of RuO₂ and Bi₂Ru₂O₇₋ₓ and one compound or 2 compounds or more selected from among Ru (OH)₄, SrRuO₃, BaRuO₃, CaRuO₃, LiRuO₃, Bi₂Ir₂O₇, Bi_{1.5}In_{0.5}Ru₂O₇, NdBiRu₂O₇ and BiInRu₂O₇;
(4) the resistor as described in (1), using a thick-film resistance body paste in which a softening point of the glass frit is from 700 to 900°C;
(5) the resistor as described in (1), forming the precoat covering layer by lead-free glass comprising, based on a glass composition analysis in accordance with an atomic absorption method (AA method), 1% by weight or less of alkali metal and, at least, from 25 to 40% by weight of silica, from 30 to 43% by weight of BaO, from 5 to 7% by weight of ZnO, from 4 to 7% by weight of Al₂O₃ and from 10 to 30% by weight of Bi₂O₃;
(6) the resistor as described in (5), having an interdiffusion layer at least at an interface between the electrode and the resistance body, or between the resistance body and the precoat covering layer;
(7) the resistor as described in (5) or (6), in which the electrode, the resistance body and the precoat covering layer are continuously formed on the substrate of an insulating body and, then, fired all together at a time;
(8) the resistor as described in (5) or (6), in which RuO₂/Bi₂Ru₂O₇-type electrically conductive material is used at least in the resistance body;
(9) the resistor as described in (5) or (6), in which, at the time of forming an end-face electrode of the resistor, a change of a glass composition of the precoat covering layer is 5% or less;
(10) the resistor as described in (5) or (6), in which a content of bismuth element in the lead-free bismuth-type glass is in a relation of 25% by weight>optimal value>15% by weight in a composition of the glass;
(11) the resistor as described in (1), in which the substrate is allowed to be a thermally resistant insulating substrate, and a surface thereof has the electrode in which lead-free bismuth-type glass is allowed to be a binder and the resistance body a part of which overlaps the electrode, in which the resistance body is constituted by electrically conductive powder comprising ruthenium oxide, bismuth ruthenate or a mixture of ruthenium oxide and bismuth ruthenate, and lead-free bismuth-type binder glass;
(12) the resistor as described in (11), in which the lead-free bismuth-type binder glass comprises, as main components, SiO₂, BaO, ZnO, Al₂O₃ and Bi₂O₃;
(13) the resistor as described in (11), in which an electrically conductive material of the electrode in which the lead-free bismuth-type glass is allowed to be the binder comprises one element or two elements or more selected from among gold, silver, platinum, palladium, an alloy thereof and a mixture thereof;
(14) the resistor as described in (11), in which the resistance body is covered by a lead-free bismuth-type glass film comprising, as main components, SiO₂, BaO, ZnO, Al₂O₃ and Bi₂O₃;
(15) the resistor as described in (1), in which the electrode is formed by a lead-free electrically conductive paste which is an electrically conductive paste comprising, as main components, silver powder, a glass frit and an organic vehicle, in which the glass frit is constitutedby a composition comprising, in percentages by weight, 1% or less of alkali metal, from 5 to 30% of Bi₂O₃, from 25 to 45% of SiO₂, from 30 to 40% of BaO, from 5 to 7% of ZnO, from 4 to 7% of Al₂O₃ and from 0.01 to 8% of B₂O₃;
(16) the resistor as described in (1), in which the electrode is formed by a lead-free electrically conductive paste which is an electrically conductive paste comprising, as main components, silver powder, palladium powder, copper powder, a glass frit and an organic vehicle, in which the glass frit is constituted by a composition comprising, in percentages by weight, 1% or less of alkali metal, from 5 to 30% of Bi₂O₃, from 25 to 45% of SiO₂, from 30 to 40% of BaO, from 5 to 7% of ZnO, from 4 to 7% of Al₂O₃ and from 0.01 to 8% of B₂O₃;
(17) the resistor as described in (15) or (16), being formed by an electrically conductive paste in which the silver powder comprises spherical powder having an average grain diameter of 2.0 µm or less and flakes having an average grain diameter of from 3.0 to 6.0 µm;
(18) the resistor as described in (15) or (16), being formed by an electrically conductive paste in which a softening point of the glass frit is from 700 to 900°C;
(19) a lead-free thick-film resistance body paste, which is a thick-film resistance body paste comprising, as main components, electrically conductive powder, a glass frit and an organic vehicle for use in forming a resistance body for a resistor comprising a substrate, a resistance body, an electrode connected to the resistance body and a precoat covering the resistance body, in which the glass frit is constituted by a composition comprising, in percentages by weight, 1% or less of alkali metal, from 10 to 30% of Bi₂O₃, from 25 to 45% of SiO₂, from 30 to 40% of BaO, from 5 to 7% of ZnO, from 4 to 7% of Al₂O₃ and from 0.01 to 8% of B₂O₃;
(20) lead-free glass, which is glass for use in forming a precoat-covering layer of a resistor comprising a substrate, a resistance body, an electrode connected to the resistance body and a precoat covering the resistance body, comprising, based on a glass composition analysis in accordance with an atomic absorption method (AA method), 1% by weight or less of alkali metal, at least, from 25 to 40% by weight of silica, from 30 to 43% by weight of BaO, from 5 to 7% by weight of ZnO, from 4 to 7% by weight of Al₂O₃ and from 10 to 30% by weight of Bi₂O₃;
(21) lead-free bismuth-type binder glass, comprising ruthenium oxide, bismuth ruthenate or a mixture of ruthenium oxide and bismuth ruthenate, for use in forming a resistance body a part of which overlaps an electrode in which lead-free bismuth-type glass is allowed to be a binder on a surface of a substrate, which is allowed to be a thermally resistant insulating substrate, of a resistor comprising the substrate, the resistance body, the electrode connected to the resistance body and a precoat covering the resistance body;
(22) a lead-free electrically conductive paste, which is an electrically conductive paste comprising, as main components, silver powder, a glass frit and an organic vehicle for use in forming an electrode of a resistor comprising a substrate, a resistance body, the electrode connected to the resistance body and a precoat covering the resistance body, in which the glass frit is constituted by a composition comprising, in percentages by weight, 1% or less of alkali metal, from 5 to 30% of Bi₂O₃, from 25 to 45% of SiO₂, from 30 to 40% of BaO, from 5 to 7% of ZnO, from 4 to 7% of Al₂O₃ and from 0.01 to 8% of B₂O₃; and
(23) a lead-free electrically conductive paste, which is an electrically conductive paste comprising, as main components, silver powder, palladium powder, copper powder, a glass frit and an organic vehicle for use in forming an electrode of a resistor comprising a substrate, a resistance body, the electrode connected to the resistance body and a precoat covering the resistance body, in which the glass frit is constituted by a composition comprising, in percentages by weight, 1% or less of alkali metal, from 5 to 30% of Bi₂O₃, from 25 to 45% of SiO₂, from 30 to 40% of BaO, from 5 to 7% of ZnO, from 4 to 7% of Al₂O₃ and from 0.01 to 8% of B₂O₃.

### BRIEF DESCRIPTION OF THE DRAWINGS

FIG. 1 is an explanatory cross-sectional diagram of a fundamental constitution of a chip-type fixed resistor according to the present invention;
FIG. 2 is a partial enlarged cross-sectional diagram of a chip-type fixed resistor in which (a) shows an enlarged cross-sectional diagram of a conventional partial constitution; and (b) shows an enlarged cross-sectional diagram of a partial constitution of an environmentally-conscious type according to the present invention;
FIG. 3 is a production process chart showing a comparison between a conventional production method and a method according to the present invention of a chip-type fixed resistor;
FIG. 4 shows an example of a resistor according to the present invention, in which (a) is a plan view; and (b) is a cross-sectional diagram taken on A-A; and
FIG. 5 is a diagram explaining a comparison between production processes of a convention resistor and a resistor according to the present invention.

### BEST MODES FOR CARRYING OUT THE INVENTION

Hereinafter, best modes for carrying out the invention and comparative examples are explained.

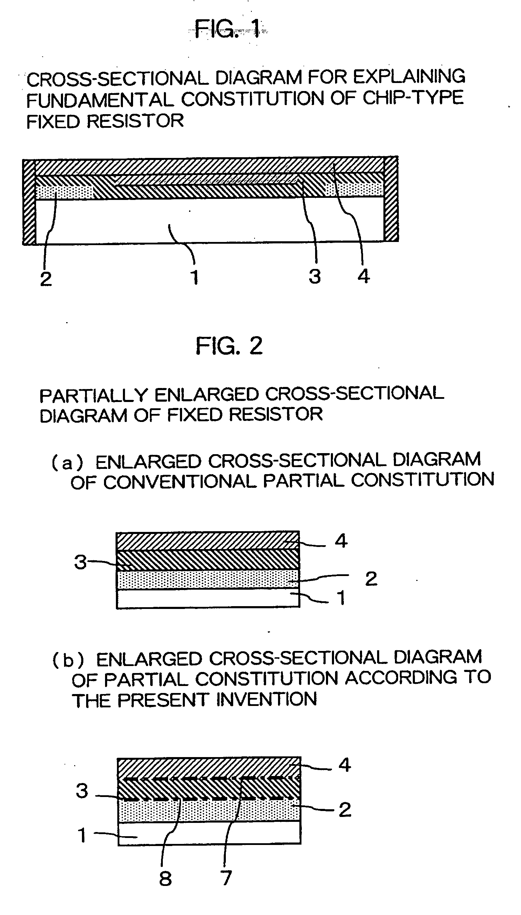

Now, with reference to FIG. 1, a fundamental constitution of a resistor is explained by means of an example of a chip-type fixed resistor; on this occasion, a resistor is constituted by forming a resistance body 3, an electrode 2 connected to the resistance body 3 and a precoat 4 covering the resistance body 3 on a substrate 1.

### I) Embodiments and comparative examples in inventions as in the aforementioned (1) to (4) and (19) are explained.

Examples of electrically conductive powder to be used in these inventions include RuO₂, Ru(OH)₄, SrRuO₃, BaRuO₃, CaRuO₃, LiRuO₃, Bi₂Ru₂O₇₋ₓ, Bi₂Ir₂O₇, Bi_{1.5}In_{0.5}Ru₂O₇, NdBiRu₂O₇ and BiInRu₂O₇. A ratio of the electrically conductive powder to a glass frit is determined depending on a required resistance value of a resistance body. Namely, when a high resistance value is required, an amount of the electrically conductive powder is allowed to be small, while, when a low resistance value is required, an amount of the electrically conductive powder is allowed to be large. However, when the amount does not reach 5% by weight, the resistance value of a formed resistance body film becomes nearly of an insulating body, while, in a case in which it is over 70% by weight, the resistance value becomes unduly low to be unable to perform a function as a resistance body; this case is not favorable.

A glass frit to be used in these inventions is SiO₂-Bi-Ba-type lead-free non-alkali glass. The glass frit is constituted by a composition comprising, in percentages by weight, 1% or less of alkali metal, from 10 to 30% of Bi₂O₃, from 25 to 40% of SiO₂, from 30 to 40% of BaO, from 5 to 7% of ZnO, from 4 to 7% of Al₂O₃ and from 0.01 to 8% of B₂O₃ and has a softening point of from 700 to 900°C. In a case in which a content ratio of Bi₂O₃ is less than 5% and the softening point of the glass frit is less than 700°C, acid resistance is reduced; this case is not favorable. Further, in a case in which the content ratio thereof is 30% or more and the softening point thereof is 900°C or more, a flow at the time of firing a thick-film resistance body paste becomes deteriorated to cause a sintering default; this case is not favorable. A content of the glass frit is, based on a thick-film resistance body paste of these inventions, from 25 to 90% by weight and, when the content is less than 25% by weight, a stable electric resistance can not be obtained, while, when the content is over 90% by weight, the electric resistance becomes high to be unstable and, accordingly, such glass frit can not be put in practical use.

Next, examples of organic vehicles to be used in these inventions include vehicles in which cellulose ethers such as methyl cellulose, ethyl cellulose, carboxymethyl cellulose, oxyethyl cellulose, benzyl cellulose and propyl cellulose are dissolved in organic solvents such as terpineol, butyl carbitol acetate and ethyl carbitol acetate, other vehicles in which acrylic resins such as methyl (meth)acrylate, ethyl (meth)acrylate, butyl (meth)acrylate and 2-hydroxyethyl methacrylate are dissolved in organic solvents such as methyl ethyl ketone, terpineol, butyl carbitol acetate and ethyl carbitol acetate, still other vehicles in which rosin-type resins such as hydrogenated rosins, polymerized rosins and rosin esters are dissolved in organic solvents.

A content of any one of these organic vehicle to be used in these inventions is, based on the thick-film resistance body paste of any one of these inventions, from 10 to 40% by weight. In a case in which it is less than 10% by weight, a viscosity of the paste becomes high, sharpness of a printed article is deteriorated; this case is not favorable. On the other hand, in a case in which it is more than 40% by weight, a dispersion default is generated and it becomes difficult to obtain a stable resistance value; this case is not favorable.

In these inventions, besides the aforementioned essential components, various types of metal oxides can be added in order to adjust a temperature coefficient of resistance (TCR). Examples of these metal oxides include Nb₂O₅, Sb₂O₃, Fe₂O₃, CaO, Al₂O₃, TiO₂, ZrO₂, MnO₂, CuO, Bi₂O₃, Ta₂O₅, MoO₃ and MgO. Taking into consideration stability of a resistance value, adhesion of the paste, stability of a glass component and the like, an amount of a TCR adjusting agent (metal oxide) to be added is, based on the solid content of the electrically conductive powder and glass frit, from 0.1 to 5% by weight.

In these inventions, other than the aforementioned components, metal salts of saturated fatty acids such as aluminum, calcium, magnesium, strontium and zinc salts of stearic acid, fatty acid amides such as stearic acid amide, oleic acid amide and erucic acid amide, waxes such as polyethylene wax, paraffin wax, microcrystalline wax and carnauba wax and rosins may be contained as dispersants.

The resistance body paste according to the present invention can be produced by firstly premixing the aforementioned components by a mixer such as a kneader and, then, kneading the resultant mixture by a 3-roll mill.

As for a specific example of a production thereof, firstly, ruthenium oxide having an average grain size of 2 µm or less and bismuth ruthenate or the aforementioned other electrically conductive fine powder, a glass frit having an average grain size of 5 µm or less and a TCR adjusting agent are mixed at respective predetermined ratios and, then, added with an organic vehicle and, thereafter, premixed by using a powerful mixer such as a kneader. Next, the resultant mixture is transferred to a 3-roll mill and kneaded at room temperature to obtain a paste. Further, in order to allow the paste to have a desired viscosity, an organic vehicle or an organic solvent such as terpineol or butyl carbitol may be added during kneading by the 3-roll mill.

A mixing ratio of the electrically conductive fine powder to the glass frit is determined depending on a resistance value which is required by a thick-film resistance body layer provided by printing or the like. Namely, when the thick-filmresistance body paste having a low resistance value is aimed for, a compounding ratio of the glass frit is allowed to be low, while, when the thick-film resistance body paste in which the thick-film resistance body layer has a high resistance value is aimed for, the compounding ratio of the glass frit may be high.

The reason why the average grain size of the electrically conductive fine powder is set to be 2 µm or less is that the electrically conductive fine powder combines with glass to allow the electrically conductive fine powder to be construced as an electrically conductive network in which the electrically conductive fine powder is configured in a network manner and, accordingly, as the electrically conductive fine powder is finer, the electrically conductive network becomes more stable. The reason why the average grain size of the glass frit is set to be 5 µm or less is to prevent screen clogging at the time of screen-printing a fine pattern, since flowability is deteriorated when the grain size thereof becomes smaller.

The thick-film resistance body paste of these 'inventions is printed on an electrode layer previously provided on an aluminum substrate in a predetermined form by using a screen printing method and, then, pre-dried at a temperature of from 120 to 150°C for from 10 to 20 minutes and, thereafter, fired at a temperature of from 800 to 900°C in a furnace.

Further, a firing period of time is set to be from 30 to 60 minutes and held for from 10 to 15 minutes at a peak temperature. The firing can be performed in a sintering atmosphere of air. By such firing as described above, the thick-film resistance body layer can be obtained. On this occasion, a film thickness of the thick-film resistance body layer is preferably set to be in the range of from 6 to 25 µm. Further, the thick-film resistance body paste of these inventions is printed on an electrode layer which has previously been set to the touch and, then, can be fired simultaneously together with the electrode layer as a unity. At that time, it is preferable that a similar glass frit to that which has been used in the thick-film resistance body paste according to the present invention is used as a binder glass of the electrode. By simultaneously firing the electrode and the thick-film resistance body, a resistor which has an advantage of shortening the operation process and, also, is lead-less can be provided.

Hereinafter, these inventions are specifically described with reference to examples. However, it should not be construed in any way that these inventions are limited thereto.

### (Example 1)

1.26 part by weight of ruthenium oxide (RuO₂), 0.84 part by weight of bismuth ruthenate (Bi₂Ru₂O₇), 4.9 parts by weight of bismuth-type glass frit (15% by weight of Bi₂O₃, 25% by weight of SiO₂, 35% by weight of BaO, 5% by weight of ZnO, 7% by weight of Al₂O₃, and 3% by weight of B₂O₃), and 4.5 parts by weight of organic vehicle (8% terpineol solution of ethyl cellulose) were sufficiently mixed by using a ceramic 3-roll mill to obtain a thick-film resistance body paste. The thus-obtained paste was screen-printed on an aluminum substrate on which an electrode (Ag electrode prepared by using the bismuth-type glass frit) had previously been printed and set to the touch in a pattern having a width of 2 mm and a length of 6 mm and, then, dried at 120°C for 15 minutes and, thereafter, fired for 30 minutes in a continuous electric furnace under a condition of a peak temperature of 850°C for 10 minutes. After the resultant fired article was cooled, a glass layer comprising the bismuth-type glass frit was provided on a surface of such thick-film resistance body layer as provided above and, subsequently, fired at 850°C to provide a protective glass film on the surface of the thick-film resistance body layer and, accordingly, a resistor was produced.

The thus-obtained resistor was dipped in a 5% sulfuric acid solution at 50°C for 5 hours and, then, a resistance value change thereof was measured. The results are shown in Table 1.

### (Example 2)

1.26 part by weight of ruthenium oxide (RuO₂), 0.84 part by weight of bismuth ruthenate (Bi₂Ru₂O₇), 4.9 parts by weight of bismuth-type glass frit (25% by weight of Bi₂O₃, 29% by weight of SiO₂, 31% by weight of BaO, 6% by weight of ZnO, 6% by weight of Al₂O₃, and 0.5% by weight of B₂O₃), and 4.5 parts by weight of organic vehicle (8% terpineol solution of ethyl cellulose) were sufficiently mixed by using a ceramic 3-roll mill to obtain a thick-film resistance body paste. The thus-obtained paste was screen-printed on an aluminum substrate on which an electrode (Ag electrode prepared by using the bismuth-type glass frit) had previously been printed and set to the touch in a pattern having a width of 2 mm and a length of 6 mm and, then, dried at 120°C for 15 minutes and, thereafter, fired for 30 minutes in a continuous electric furnace under a condition of a peak temperature of 850°C for 10 minutes. After the resultant fired article was cooled, a glass layer comprising the bismuth-type glass frit was provided on a surface of such thick-film resistance body layer as provided above and, subsequently, fired at 850°C to provide a protective glass film on the surface of the thick-film resistance body layer and, accordingly, a resistor was produced.

The thus-obtained resistor was dipped in a 5% sulfuric acid solution at 50°C for 5 hours and, then, a resistance value change thereof was measured.

The results are shown in Table 1.

### (Example 3)

The thick-film resistance body paste obtained in Example 1 was screen-printed between electrodes on an aluminum substrate on which the electrodes (Ag electrodes prepared by using the bismuth-type glass frit as in Example 1) had previously been printed and set to the touch in a pattern having a width of 2 mm and a length of 6 mm and, then, dried at 120°C for 15 minutes, to thereby form a resistance body layer. Thereafter, a precoat glass which was allowed to be in paste form by using the same glass frit as used in Example 1 was printed on a surface of the thus-formed resistance body layer in the same pattern as described above and, then, dried at 120°C for 15 minutes, to thereby form a precoat layer. Further, the aluminum substrate on which the 3 layers had thus been printed and dried was fired in a continuous electric furnace for 30 minutes under a condition of a peak temperature of 850°C for 10 minutes, to thereby obtain a fixed resistor. The thus-obtained resistor was dipped in a 5% sulfuric acid solution at 50°C for 5 hours and, then, a resistance value change thereof was measured.

The results are shown in Table 1.

### (Comparative Example 1)

1.26 part by weight of ruthenium oxide (RuO₂), 0.84 part by weight of bismuth ruthenate (Bi₂Ru₂O₇), 4.9 parts by weight of ZnO-B₂O₃-SiO₂-type glass frit and 4.5 parts by weight of organic vehicle (8% terpineol solution of ethyl cellulose) were mixed by using a ceramic 3-roll mill to obtain a thick-film resistance body paste.

The thus-obtained paste was screen-printed on an aluminum substrate on which an electrode (Ag electrode prepared by using the ZnO-B₂O₃-SiO₂-type glass frit) had previously been printed and set to the touch in a pattern having a width of 2 mm and a length of 6 mm and, then, dried at 120°C for 15 minutes and, thereafter, fired for 30 minutes in a continuous electric furnace under a condition of a peak temperature of 850°C for 10 minutes. After the resultant fired article was cooled, a glass layer comprising the ZnO-B₂O₃-SiO₂-type glass frit was provided on a surface of such thick-film resistance body layer as provided above and, subsequently, fired at 850°C to provide a protective glass film on the surface of the thick-film resistance body layer and, accordingly, a resistor was produced.

The thus-obtained resistor was dipped in a 5% sulfuric acid solution at 50°C for 5 hours and, then, a resistance value change thereof was measured.

The results are shown in Table 1.

### (Comparative Example 2)

A thick-film resistance body paste was obtained in a same manner as in Example 2 except that a glass frit having a composition (5% by weight of Bi₂O₃, 35% by weight of SiO₂, 40% by weight of BaO, 7% by weight of ZnO and 6% by weight of Al₂O₃) was used in place of the bismuth-type glass frit as in Example 2. The thus-obtained paste was screen-printed on an aluminum substrate on which an electrode (Ag electrode prepared by using the bismuth-type glass frit) had previously been printed and set to the touch in a pattern having a width of 2 mm and a length of 6 mm and, then, dried at 120°C for 15 minutes and, thereafter, fired for 30 minutes in a continuous electric furnace under a condition of a peak temperature of 850°C for 10 minutes. After the resultant fired article was cooled, a glass layer comprising the bismuth-type glass frit was provided on a surface of the thick-film resistance body layer which had been provided as described above and, subsequently, fired at 850°C to provide a protective glass film on the surface of the thick-film resistance body layer and, accordingly, a resistor was produced.

The thus-obtained resistor was dipped in a 5% sulfuric acid solution at 50°C for 5 hours and, then, a resistance value change thereof was measured.

The results are shown in Table 1.

**(Table 1)**

| | Initial resistance value (Ω/□) | TCR (ppm/°C) | After acid resistance test | | Appearance judgment by visual observation |
|---|---|---|---|---|---|
| | | | Change rate of resistance value(%) | Change rate of TCR(%) | |
| Example 1 | 647 | 716 | 1.55 | 6.84 | ○ |
| Example 2 | 587 | 733 | 1.36 | 5.59 | ○ |
| Example 3 | 497 | 791 | 0.8 | 3.16 | ⓞ |
| Comparative Example 1 | 683 | 701 | 2.1 | 9.12 | × |
| Comparative Example 2 | 1469 | 776 | 3.27 | 14.82 | × |
| ○Fair ⓞExcellent × Not permissible | | | | | |

The resistor produced by using the thick-film resistance body paste according to these inventions is found to be low in the change rates of resistance value and TCR and, also, excellent in smoothness of appearance by an acid resistance test. Further, when the thick-film resistance body paste according to these inventions is used, since the electrode portion, resistance body portion and precoat glass portion can be formed by simultaneous firing, a substantial process shortening can be attempted and, accordingly, rationalization of the production can be attempted. Further, since the resistor does not contain PbO, the resistor is advantageous also from the standpoint of an environmental protection.

### II) Embodiments and comparative examples in inventions in the aforementioned (5) to (10) and (20) are explained.

A constitution and production method for a conventional chip-type fixed resistor and a new constitution and production method for an environmentally-conscious chip-type fixed resistor invented by the present inventors are described in detail bymeans of comparison therebetween.

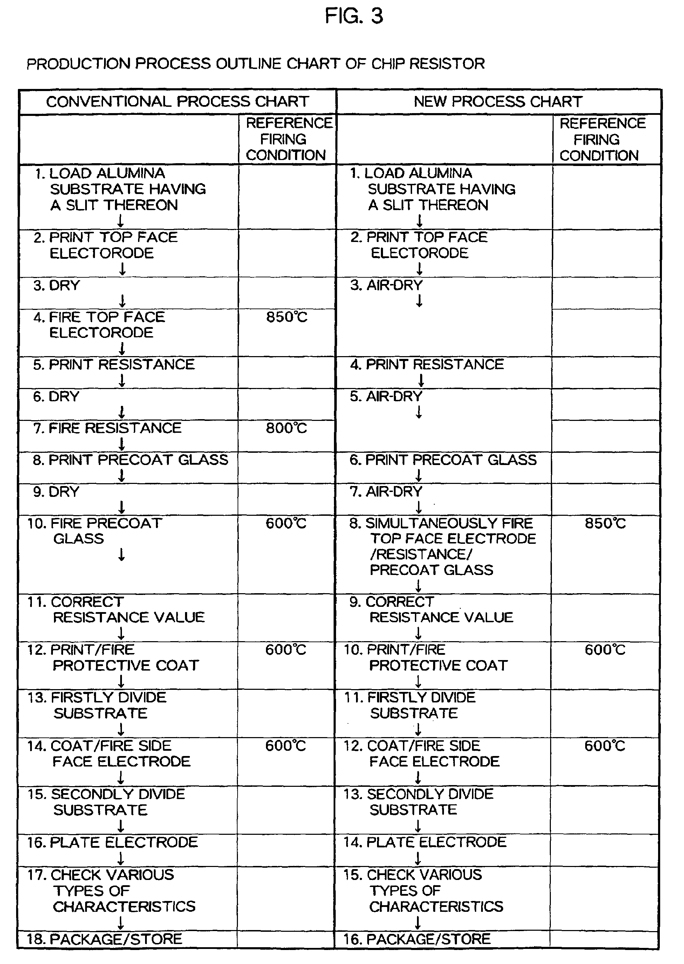

Firstly, FIG. 3 shows a comparison between a production process chart (left) of a conventional method and a production process chart (right) of a method according to the present invention for the chip-type fixed resistor. Further, FIG. 1 is an explanatory cross-sectional diagram of a fundamental constitution of a chip-type fixed resistor; FIG. 2(a) is an enlarged cross-sectional diagram of a conventional partial constitution; FIG. 2(b) is an enlarged cross-sectional diagram of a partial constitution according to these inventions. Further detailed description is made with reference to FIGS. 1, 2, and 3.

Hereinafter, the aforementioned inventions (5) to (10) are specifically described with reference to examples. However, it should not be construed in any way that these inventions are limited thereto.

### (Example 4)

In regard to a 3C1F method according to the present invention, a production method and a constitution method of a fixed resistor are described with reference to FIGS. 1, 2 and 3 by means of comparison with conventional ones. In a fundamental constitution of a conventional fixed resistor, as shown in FIG. 1, electrodes 2 are formed by printing on an alumina substrate of high purity 1 in an opposing manner and, then, in accordance with a conventional production process chart as shown in FIG. 3, the electrodes thus formed by printing are air dried, dried at a temperature of from 120°C to 150°C and fired at 850°C and, subsequently, a resistance body 3 is formed by printing on the thus-fired electrodes 2, air dried, dried and fired at 800°C and, succeedingly, as shown in FIG. 1, a precoat layer 4 is formed by printing on the thus-fired resistance body 3, air dried, dried and fired at a temperature of from 600°C to 650°C; accordingly, a conventional fixed resistor has been produced.

Since the present invention also passes through same steps as those of from 11 to 18 in a conventional process chart as shown in FIG. 3, explanations of these steps are omitted in the present invention.

Problems of the process of a conventional method, in a broad sense of meaning, are: (1) the process is complicated, since the process is 3-coat-1-fire (3C3F) ; (2) 3 firing furnaces are necessary, since the firing is performed 3 times at different temperatures of 850°C, 800°C and 600°C, respectively; (3) 3C3F is high in energy cost for firing; and (4) control and storage of glass for pastes at the time of printing are troublesome from the standpoint of quality control and cost, since the glass is lead-containing glass and a softening point thereof is different for each application. Although having various types of problems including these and other problems, such production process as described above has been continued in the world for 25 years. This is because, not only users did not want to change processes, but also glass manufacturers and paste producers wanted to change materials as less as possible; accordingly, such production process as described above has been executed and maintained.

However, in view of the current of the times, the present inventors have proposed a synthesis of glass, a constitution method of a chip-type fixed resistor and an energy-saving production process with an intention of developing an environmentally-conscious chip-type fixed resistor, and a fundamental constitution method according to the present invention and the 3C1F according to the present invention are described below.

According to the present invention, glass for various types of pastes to be described in detail in Example 5 is allowed to be lead-free, to thereby synthesize novel lead-free glass. Further, in a conventional method, although each layers of an electrode layer, a resistance layer and a precoat layer is formed by performing steps of from printing to drying to firing three times (3-coat-3-fire, that is, 3C3F in short) to produce a chip-type fixed resistor, while, according to the present invention, as the process in FIG. 3, steps of from electrode printing to air drying to resistance printing to air drying to precoat printing to air drying to firing (3C1F method) are performed on an insulating alumina substrate to allow the process to be substantially shortened; accordingly, the chip-type fixed resistor which is environmentally-conscious, energy-saving, low-cost and highly-reliable was able to be produced.

Advantages of Example 4 are as follows:
(1) A most remarkable characteristic is that there is no need of repeating steps of printing, drying and firing three times as has been done in a conventional method and an overlapping printing can be performed only through such steps as printing and air drying and, accordingly, a process time is shortened to omit a firing step to be performed every time after printing is performed and, as a result, remarkable improvements such as a reduction of the number of man-hour, shortening of a process time period, reduction of facility cost of a firing furnace and energy saving was able to be realized;
(2) In regard to a constitutional cross-sectional diagram of a chip-type fixed resistor obtained by the 3C1F process, as shown in FIG. 2(a), in a conventional example, due to a 3C3F method, an interdiffusion layer is not noticed between any two layers of an electrode 2, a resistance body 3 and a precoat 4 to be formed on a substrate 1, while, in a 3C1F method according to the present invention, since a firing step is performed only once and, also, an electrode paste, a resistance body paste and a precoat paste are simultaneously fired at a same temperature, as shown in FIG. 2(b), interdiffusion layers 7, 8 can be noticed by an SEM or optical microscopic observation between any two layers; and
(3) In a method, according to the present invention, since the interdiffusion layer is formed, a resistance change after a temperature cycle test, a change in time, an ON/OFF cycle test or a laser trimming becomes small, to thereby remarkably improve a yield.

As a result, such multitude of improvements as described above became possible.

### (Example 5)

Next, in Example 5, an embodiment of synthesis of a largest novel glass according to the present invention is described. On synthesizing the novel glass for a fixed resistor, the following were taken into consideration: (1) synthesis of non-lead glass; (2) synthesis of non-alkali or low-alkali glass; (3) synthesis of glass capable of performing 3C1F; (4) acid resistances (glass elution change rate and surface change) before and after plating at the time of plating an end-face electrode of a chip-type fixed resistance; and (5) a low resistance change rate of a fired precoat layer against a pre-firedprecoat layer. The novel glass was synthesizedby putting a viewpoint on these considerations and the like.

In Table 2, a composition of the novel glass of Example 5, a firing method of a resistance body, evaluations of various types of glass and an evaluation of the resistance body are comprehensively described. Further, in Table 2, an analysis of the glass is extremely difficult and, since it consumes a long time to perform a quantitative analysis, the results are shown, for a convenience purpose, in accordance with a composition analysis performed by an atomic absorption spectrometry. However, since an analysis of B (boron) can not be performed by the atomic absorption spectrometry, boron is not indicated in Table 2; notwithstanding, glass containing from 0.01% by weight to 8% by weight of B₂O₃ measured by an ICP (inductively coupled radio frequency plasma) method in a glass composition is used in the present invention. Therefore, a glass composition in the scope of claims according to the present invention is shown as that in terms of a gravimetric system in accordance with the atomic absorption spectrometry.

In Table 2, SiO₂ compositions in the glass compositions of experiments Nos. 1 to 5 were changed from one another, while other compositions than SiO₂ compositions were set to be those approximate to respective optimal values. Judging collectively glass composition changes, glass and characteristics of resistance values, experiments Nos. 2 to 4 comprehensively showed excellent characteristics and, accordingly, it was found excellent that an optimal value of the SiO₂ composition of lead-free glass was in the range of from 25% by weight to 40% by weight.

In Table 2, in experiments Nos. from 6 to 10, BaO compositions of glass compositions were changed from one another, while other compositions than the BaO compositions were set to those approximate to respective optimal values. Judging collectively glass composition changes, glass and characteristics of resistance values, experiments Nos. 7 to 9 comprehensively showed excellent characteristics and, accordingly, it was found excellent that an optimal value of the BaO composition of lead-free glass was in the range of from 30% by weight to 40% by weight.

In Table 2, in experiments Nos. from 11 to 14, ZnO compositions of glass compositions were changed from one another, while other compositions than the ZnO compositions were set to those approximate to respective optimal values. Judging collectively glass composition changes, glass and characteristics of resistance values, experiments Nos. 12 and 13 comprehensively showed excellent characteristics and, accordingly, it was found excellent that an optimal value of the ZnO composition of lead-free glass was in the range of from 5% by weight to 7% by weight.

In Table 2, in experiments Nos. from 15 to 18, Al₂O₃ compositions of glass compositions were changed from one another, while other compositions than the Al₂O₃ compositions were set to those approximate to respective optimal values. Judging collectively glass composition changes, glass and characteristics of resistance values, experiments Nos. 16 and 17 comprehensively showed excellent characteristics and, accordingly, it was found excellent that an optimal value of the Al₂O₃ composition of lead-free glass was in the range of from 4% by weight to 7% by weight.

In Table 2, in experiments Nos. from 19 to 23, Bi₂O₃ compositions of glass compositions were changed from one another, while other compositions than the Bi₂O₃ compositions were set to those approximate to respective optimal values. Judging collectively glass composition changes, glass and characteristics of resistance values, experiments Nos. 20 to 22 comprehensively showed excellent characteristics and, accordingly, it was found excellent that an optimal value of the Bi₂O₃ composition of lead-free glass was in the range of from 10% by weight to 30% by weight.

In Table 2, it was found from experiment results of experiment Nos. 1 to 23 that a ratio of Bi in the glass composition gave a large influence to the resistance change rate of the fired precoat layer against the pre-fired precoat layer.

It was found that an optimal weight ratio of Bi element in the glass composition was in a relation of 25%>optimal value>15%. By such finding, it was found that, when the precoat layer was fired, a bismuth-type resistance material was diffused in a binder glass to give an influence to the resistance change rate. It was found from this face that, so long as a content ratio of Bi element in the glass is held within an optimal range, the fixed resistance change between before and after the firing was small and, accordingly, it was capable of stably produce the chip-type fixed resistor.

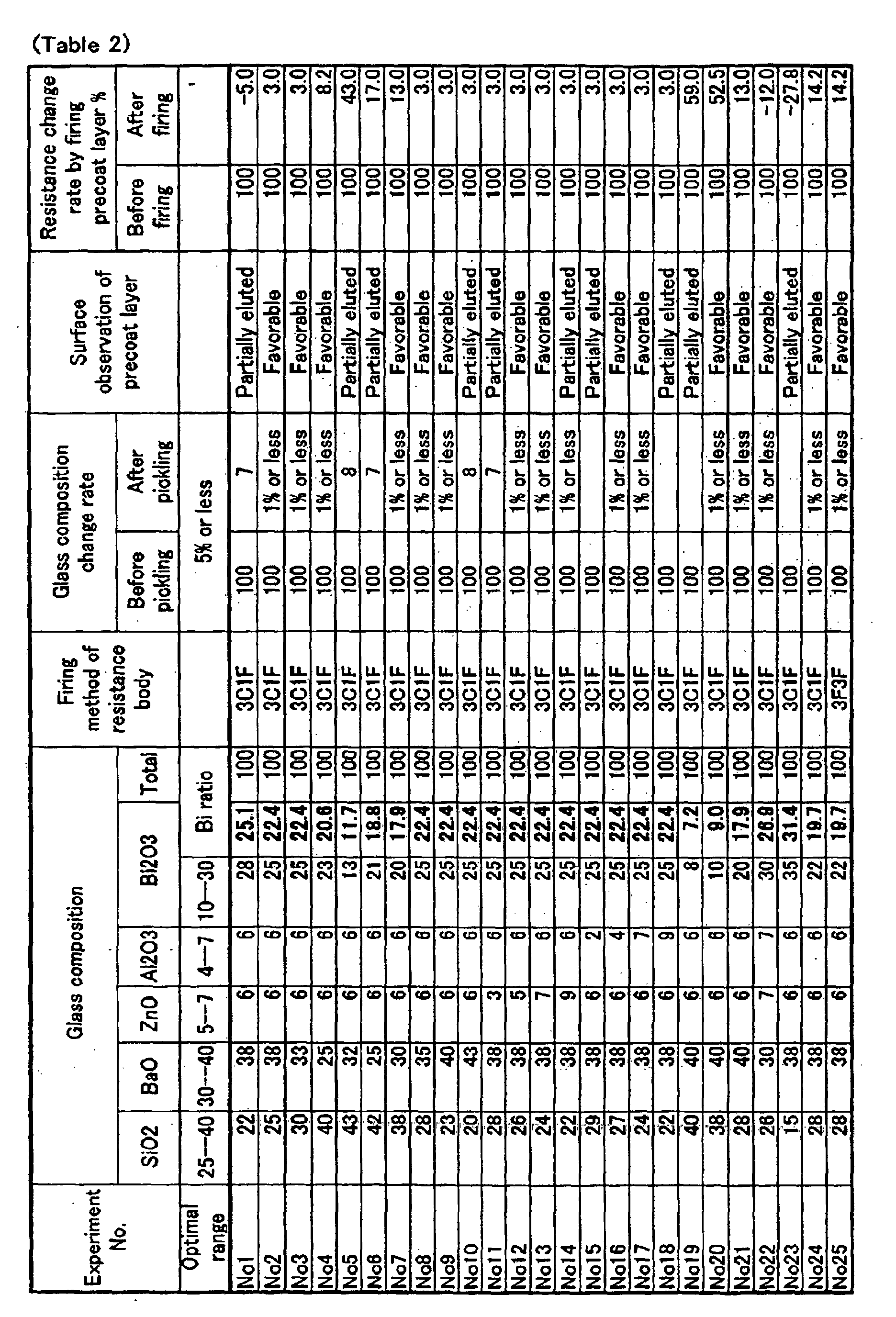

Since the fixed resistor in Example 1 according to the present invention uses lead-free glass in binder glass in each of the electrode layer, resistance body layer and precoat covering layer, it is extremely effective in a global environmental protection. Further, since the fixed resistor is constituted such that the electrode layer, resistance body layer and the precoat covering layer were dried to the touch and subjected to a firing step once, the electrode paste, resistance body paste and precoat paste are simultaneously fired at a same temperature and, as a result, since the interdiffusion layer is formed between any two layers, the resistance change rate after the temperature cycle test, changes in times, the ON/OFF cycle test and the laser trimming is extremely small and, accordingly, the yield of the fixed resistor is remarkably improved.

### III) Embodiments and comparative examples in inventions in the aforementioned (11) to (14) and (21) are explained.

This embodiment relates to a printing-type thick-film resistor and to a resistor in which all of an electrode, a resistance body and a protective glass film for the purpose of protecting the resistance body are constituted by lead-free materials and, further, firing steps of the electrode forming, the resistance body forming and the protective glass film forming can simultaneously be performed.

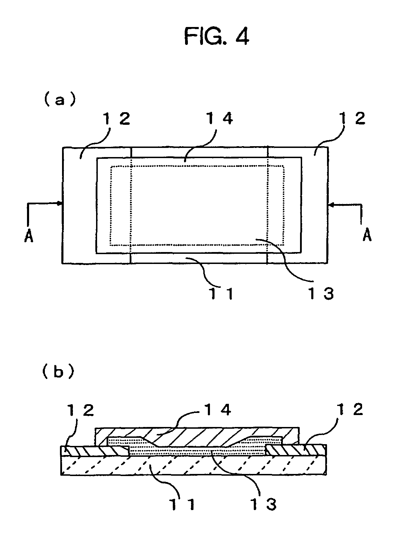

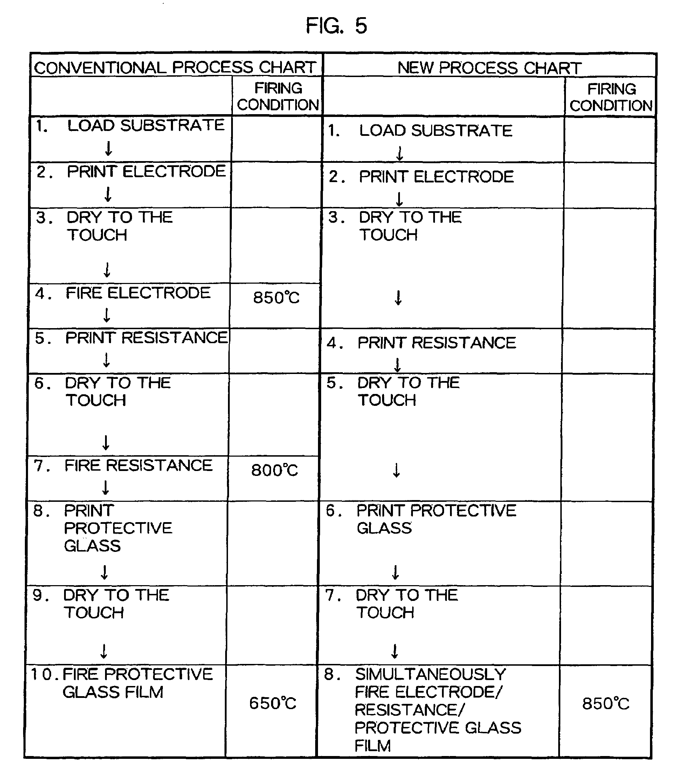

FIG. 4 shows an example of a resistor according to the present invention: (a) is a plan view; and (b) is a cross-sectional view taken on A-A in (a). FIG. 5 is an explanatory chart showing comparison between a production process of a conventional resistor and that of a resistor according to the present invention.

In FIG. 4, as reference numerals, 11 indicates an alumina substrate of high purity (hereinafter referred to also as "alumina substrate"); 12 indicates a silver electrode of lead-free bismuth-type binder glass (hereinafter referred to also as "new electrode"); 13 indicates a resistance body of lead-free bismuth-type binder glass (hereinafter referred to also as "new resistance body") ; and 14 indicates a lead-free bismuth-type glass film (hereinafter referred to also as "new glass film") which covers the resistance body for a protecting purpose.

Particularly, in a case of a constitution in which main components of the lead-free bismuth-type binder glass are SiO₂, BaO, ZnO, Al₂O₃ and Bi₂O₃, SiO₂ and Al₂O₃ are skeletal materials which constitute a glass network while BaO and ZnO are used for playing a role of adjusting a softening point of glass to allow it to correspond to a firing temperature of the production process of the resistor and for stabilize the glass. Bi₂O₃-containing glass forms an interdiffusion layer at an interface with bismuth ruthenate (Bi₂Ru₂O₇) which is a resistance material, to thereby stabilize electric conductivity of the resistance body.

Further, in a case of a constitution in which an electrically conductive material of an electrode in which lead-free bismuth-type glass is allowed to be a binder is gold, silver, platinum, palladium, an alloy or a mixture of these metals, a lead-free stable electrically conductive electrode for resistance having 50 mΩ or less of areal resistance value can be obtained by allowing each of the aforementioned metals to be contained in an amount of from 60% to 90%.

Still further, in a case of a constitution in which the resistance body is covered by a bismuth-type glass film, which is lead-free, comprising, as main components, SiO₂, BaO, ZnO, Al₂O₃ and Bi₂O₃, by such constitution, the aforementioned bismuth-type glass is excellent in acid resistance and is same type of glass as the lead-free bismuth-type glass of the resistance body and, then, an interdiffusion layer is formed at an interface between the resistance body and the protective layer and, accordingly, a strong adhesion can be obtained and, also, the resistance body can be put in a completely hermetic state and, as a result, a constitution which can contribute to improvement of reliability of the resistor and environmental protection can be realized.

In such constitution as described above, a case in which the production of the resistor according to the present invention is performed by either a conventional process or a new process is explained in an orderly manner with reference to FIG. 5.

Firstly, the conventional process is described. In a first step of the conventional process, an alumina substrate 1 is prepared. In a second step thereof, a silver electrode paste of lead-free bismuth-type binder glass is electrode-printed on the alumina substrate 1 by using a screen mask for an electrode. In a thirds step, an electrode thus printed is dried to the touch at a temperature of from 100°C to 150°C. In a fourth step, the electrode thus dried to the touch is electrode-fired at 850°C, to thereby form a new electrode 2. In a fifth step, a resistance paste of lead-free bismuth-type binder glass is resistance body-printed by using a screen mask for resistance body such that it partially overlaps the new electrode 2. In a sixth step, the resistance body thus printed is dried to the touch in a same manner as in the electrode thus printed. In a seventh step, the resistance body thus dried to the touch is fired at 800°C, to thereby form a new resistance body 3. in a eighth step, lead-free bismuth-type glass paste is protective-glass-film-printed by using a screen mask for glass such that it covers an entire surface of the new resistance body 3. In a ninth step, the protective glass film thus printed is dried to the touch in a same manner as in the electrode thus printed. In a tenth step, the protective glass film thus dried to the touch is fired at 650°C, to thereby form a new glass film 4 and, as a result, a resistor according to the present invention can be obtained.

Next, a new process is explained in an orderly manner also with reference to FIG. 5. However, explanation of a case in which same conditions as in the conventional process are applied is omitted. Preparation of a substrate in a first step, electrode-printing in a second step and drying to the touch in a third step are performed by using respective same materials in respective same manners as in the conventional process. However, an electrode firing in the fourth step in the conventional process is deleted and, instead, resistance printing is performed in a fourth step of the new process and, in this step, a resistance paste of lead-free bismuth-type binder glass is resistance-body-printed by using a screen mask for the resistance body such that it partially overlaps the electrode thus dried to the touch. In a fifth step, drying to the touch is performed in a same manner as in that in the third step. However, the resistance firing in the seventh step in the conventional process is deleted and, then, a sixth step of the new process is performed and, in this step, lead-free bismuth-type glass paste is protective-glass-film-printed by using a mask for glass such that it covers an entire surface of the resistance body thus dried to the touch. Drying to the touch in a seventh step is performed in a same manner as in the drying to the touch in the third step. In the first to seventh steps in the new process, firing is not performed even once and, by performing simultaneous firing of an electrode, a resistance body and a protective glass film of a eighth step, the electrode, resistance body and protective glass film are simultaneously fired at 850°C and, as a result, a resistor according to the present invention can be obtained.

As has been explained, the resistor according to the present invention can be produced by the conventional process and the new process. However, since, in the new process, a firing step can simultaneously be performed all together at a time in a last step, two steps, namely, electrode firing and resistance firing in a midway process which is required in the conventional process can be deleted. Particularly, since the firing step requires a high temperature, an energy-saving effect is remarkable.

Next, test results and characteristic values of the resistor actually produced by using the lead-free bismuth-type glass binder in accordance with each of the conventional process and the new process as shown in FIG. 5 are described below.
(1) When an electrode was formed by using a lead-free binder glass, as a new electrode material, comprising, as main components, 28% by weight of SiO₂, 31% by weight of BaO, 6% by weight of ZnO, 6% by weight of Al₂O₃ and 24% by weight of Bi₂O₃ and 5% by weight of other components, and an electrode paste, as an electrically conductive material, comprising from 60% by weight to 90% by weight of silver fine powder and an organic vehicle in accordance with the conventional process as shown in FIG. 5, an areal resistance value came to be 50 mΩ or less. Further, a surface state thereof after firing was favorable and adhesion strength with an alumina substrate was sufficient. Therefore, the electrode is satisfactory for the thick-film resistor for printing. Further, although the silver fine powder was used as the electrically conductive material on this occasion, it was separately confirmed that gold, platinum and palladium which are each a noble metal, an alloy thereof and a mixture thereof are permissible so long as they are used in a same manner as that described above.
(2) A resistor was produced by using the electrode as described in (1) while changing content of Bi₂O₃ of the lead-free bismuth-type glass binder. Main components of the lead-free bismuth-type glass binder are as follows (% is given in terms of a unit of weight %):
   Product containing 13% Bi₂O₃
   Product containing 21% Bi₂O₃
   Product containing 25% Bi₂O₃
   Product containing 30% Bi₂O₃

   Further, as for a glass material of a protective glass film, the lead-free bismuth-type glass binder, that is, the product containing 25% Bi₂O₃ as described above, was used. The electric conductive material comprised only RuO₂; and a ratio of RuO₂/bismuth-type binder glass was set to be 20/80 as being constant.
   Resistance characteristics of the resistor according to the present invention produced by using the aforementioned materials in accordance with each of the conventional process and the new process are shown in Table 3(a).
   From the results, it was confirmed that, as the content ratio of Bi₂O₃ was increased more, the resistance value became lower. It is considered that this is because RuO₂ and Bi₂O₃ react with each other at the time of firing to form Bi₂Ru₂O₇, though by a small rate. Further, the resistance value becomes higher in the new process than in the conventional one. The reason for it is considered to be due to a difference in a thermal history therebetween. However, it was also confirmed that, so long as a content ratio of Bi₂O₃ was in the range of from 13% to 30%, stability of the resistance value and a surface state of the resistance body were favorable and the resultant resistor was satisfactory as a lead-free printing-type thick-film resistor.
(3) The resistor according to the present invention was produced by using the electrode as described in (1), the product containing 25% Bi₂O₃ as described in (2) as a bismuth-type glass binder in a new resistance material, and only Bi₂Ru₂O₇ as an electrically conductive material in accordance with the new process as described in FIG. 5 while changing the ratio of Bi₂Ru₂O₇/bismuth-type glass binder. The resistance characteristics of the thus-produced resistor according to the present invention are shown in Table 3(b).
   From the results, it was confirmed that, as the content ratio of Bi₂Ru₂O₇ in the bismuth-type glass binder was decreased more, the resistance value became higher. It is found that, by changing the ratio of Bi₂Ru₂O₇/bismuth-type glass binder, a wide range of the resistance value can be secured. Further, it was also confirmed that, so long as a content ratio of Bi₂Ru₂O₇ was in the range of from 20% to 50%, stability of the resistance value and a surface state of the resistance body were favorable and the resultant resistor was sufficiently satisfactory as a lead-free printing-type thick-film resistor.
(4) The resistor according to the present invention was produced by using the electrode as described in (1), the product containing 25% Bi₂O₃ as described in (2) as a glass binder in a new resistance material, and a material comprising a mixture of RuO₂ and Bi₂Ru₂O₇ as an electrically conductive material in accordance with the new process as described in FIG. 2 while changing the ratio of RuO₂/Bi₂Ru₂O₇. However, when RuO₂/Bi₂Ru₂O₇ is represented by R, R/bismuth-type glass binder was set to be 30/70 as being constant. The resistance characteristics of the thus-produced resistor according to the present invention are shown in Table 1 (c).
   From the results, it is found that, when a ratio of RuO₂ is decreased, the resistance value becomes higher. Further, in the resistor according to the present invention, on the basis of calculated Ru metal content ratios, when RuO₂/Bi₂Ru₂O₇ is 100/0 (Ru metal content ratio is 23%), the resistance value was 19Ω, while, when RuO₂/Bi₂Ru₂O₇ is 20/80 (Ru metal content ratio is 11%), the resistance value was 58Ω; this shows that, even when the Ru metal content ratio is decreased down to about one half thereof, the resistance value was slightly increased from 19Ω to 58Ω and, accordingly, when the resistor having a same resistance value is produced, the Ru metal, which is a noble metal, is allowed to be in a small amount and, therefore, a material cost can be low and, also, the resistor can correspond to the environmental protection. Further, it was also confirmed that, so long as the content ratio of RuO₂ in RuO₂/Bi₂Ru₂O₇ was 20% or more, stability of the resistance value and a surface state of the resistance body were favorable and the resultant resistor was sufficiently satisfactory as a lead-free printing-type thick-film resistor.
(5) The resistor according to the present invention was produced by using the electrode as described in (1), the product containing 25% Bi₂O₃ as described in (2) as a bismuth-type glass binder in a new resistance material, and a material comprising a mixture of RuO₂ and Bi₂Ru₂O₇ as an electrically conductive material in accordance with the new process as described in FIG. 5 while allowing the ratio of RuO₂/Bi₂Ru₂O₇ to be 50/50 (hereinafter, referred to also as "R₅₀") as being constant and changing the ratio of R₅₀/Bi-type glass. The resistance characteristics of the thus-produced resistor according to the present invention are shown in Table 3 (d).
   From the results, it is found that, when a content ratio of Bi₂Ru₂O₇ in the Bi-type glass binder is decreased, the resistance value becomes higher and, also, by changing the ratio of R/Bi-type glass, a wide range of the resistance value can be secured. Further, it was also confirmed that stability of the resistance value and a surface state of the resistance body were favorable and the resultant resistor was sufficiently satisfactory as a lead-free printing-type thick-film resistor.
(6) The electrode as described in (1) was used, a bismuth-type glass binder in a new resistance material was allowed to be the product containing 25% Bi₂O₃ as described in (2), only RuO₂ was used as an electrically conductive material, and RuO₂/bismuth-type binder glass was allowed to be 20/80. A new glass film material has a same composition as that of the bismuth-type glass binder as described in (2) and the content ratio of Bi₂O₃ therein was changed in four ways in the range of from 13% to 30%. The resistor according to the present invention was produced by using such materials as described above in accordance with the new process as described in FIG. 2. The resistance characteristics of the thus-produced resistor according to the present invention, acid resistance test results and appearance judgment results are shown in Table 3(e).

From the results, it is found that, when a content ratio of Bi₂O₃ in the new glass film is increased, the resistance value becomes lower. It is considered that such phenomenon occurred from the fact that a thermal reaction occurred at an interface between Bi₂O₃ in the binder glass and RuO₂ in the electrically conductive material to form an interdiffusion layer in which a slight amount of Bi₂Ru₂O₇ was generated and, then, the thus-generated Bi₂Ru₂O₇ gave an influence to the resistance value. The acid resistance test was performed in accordance with a method in which the resistor is left in a 5% sulfuric acid solution at 50°C for 5 hours and, then, a resistance value change is examined. It is admitted that, so long as the resistance value change falls within the range of ±5%, performance of the resistor has no problem; particularly in a case in which the content ratio of Bi₂O₃ is from 25% by weight to 34% by weight, the ratio of the resistance value change is low. This indicates that the acid resistance of the bismuth-type glass of the new glass film of interest is excellent. Further, the appearance judgment (by visual observation) on a surface of the glass which has been subjected to the acid resistance test was no problem in any case; particularly in the range of 25% by weight to 34% by weight thereof, the appearance was excellent. It was confirmed that, as described above, by covering the surface of the new resistance body with the lead-free bismuth-type glass excellent in acid resistance, reliability of the resistor according to the present invention was able to be enhanced and the resistor was sufficiently satisfactory as a lead-free printing-type thick-film resistor.

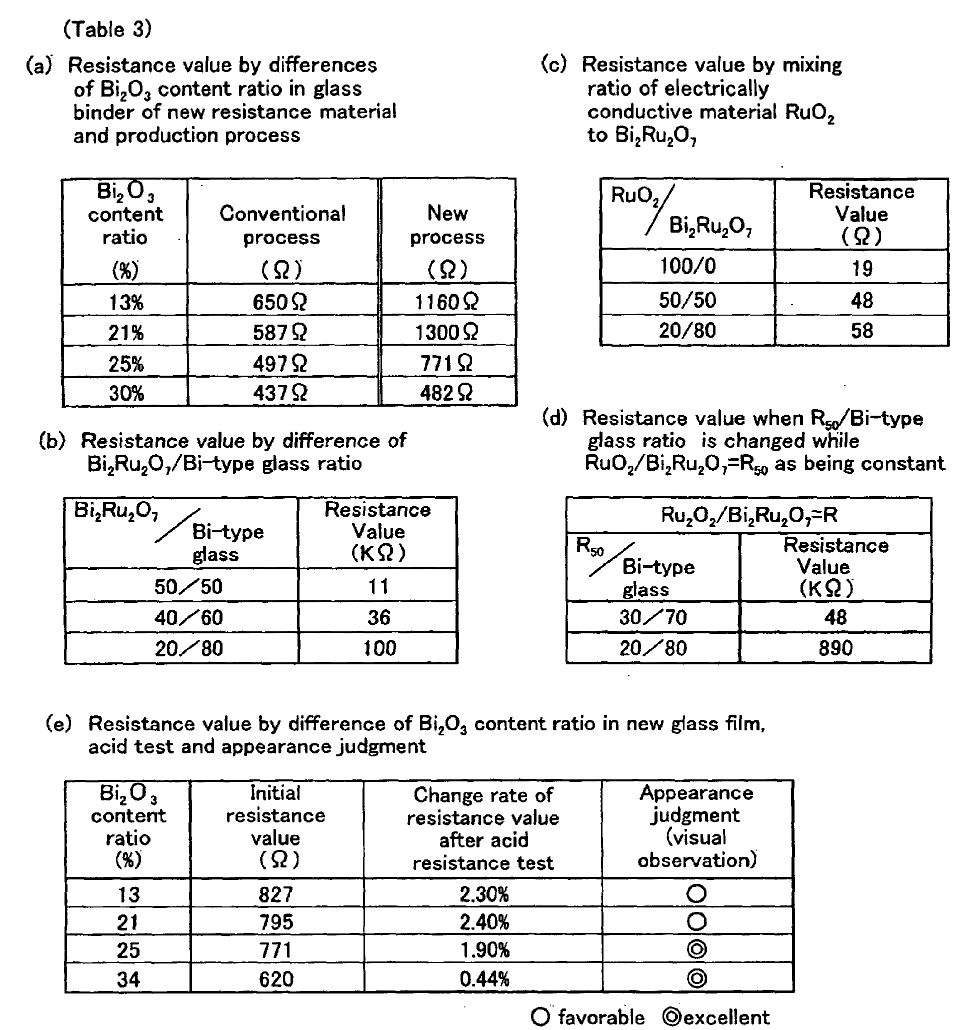

As has been described above, the resistor according to the present invention, in which alumina of high purity is used for the substrate, a lead-free bismuth-type glass binder is used for all of the new electrode, new resistance body and new precoat film, is constituted as a completely lead-exclusive-type resistor, is capable of simultaneously firing the electrode, resistance body and glass film therein all together at a time and exhibits an effect of corresponding to the environmental protection.

### IV) Embodiments and comparative examples in inventions in the aforementioned (15) to (18), and (22) and (23) are explained.

These embodiments relate to an electrically conductive paste for use in forming an electrode of a printing-type thick-film fixed resistor and, particularly, to lead-free electrically conductive paste using bismuth-type glass which does not contain PbO.

The printing-type thick-film fixed resistor is ordinarily produced in the process described below.

Firstly, an electrically conductive paste is screen-printed in a slit on an alumina substrate which has been provided with the slit for separation, dried at 120 to 150°C and, then, fired at 800 to 850°C in an electric furnace to form top face electrodes. Next, a resistance paste is screen-printed such that it bridges over the top face electrodes, dried at 120 to 150°C and, then, fired at 700 to 850°C in the electric furnace to form a resistance body. Further, a glass paste for a precoat is screen-printed on a top face of the resistance body, dried at 120 to 150°C, fired at 600 to 850°C in the electric furnace and, then, laser-trimmed to perform a desired resistance value correction. Still further, a glass paste for an overcoat is printed on a precoat layer, dried at 120 to 150°C, fired at 600 to 850°C again in the electric furnace. Thereafter, the alumina substrate is separated between slits and, then, silver-type electrically conductive paste is applied on a side face of the resultant split substrate by dipping or printing, dried and, subsequently, fired at 600 to 700°C to form a side face electrode.

Furthermore, lastly, the side face electrode is nickel-plated to complete a printing-type thick-film fixed resistor. As for PbO-free glass frits, for example, bismuth borosilicate-type glass, zinc borosilicate-type glass and borosilicate-type glass have been known. Although these lead-free glass frits have been used in a trial manner, none of them were satisfactory in an acid resistance test which was required at the time of nickel plating.

These inventions provide a lead-free electrically conductive paste which is capable of effectively enhancing acid resistance and sulfuration resistance, excellent in solder wettability and capable of simultaneously firing an electrode and a resistance body without causing a crack, crease, blur and the like in a joint between an electrode portion and a resistance body portion.

As a result of performing various types of studies, it has been found that an electrode of a fixed resistor which is favorable in acid resistance, sulfuration resistance and solder wettability can be obtained by preparing an electrically conductive paste by means of using SiO₂-Bi-Ba-type lead-free non-alkali glass in which a bismuth content is allowed to be in a specified range as binder glass of an electrically conductive paste for electrode.

Hereinafter, embodiments of these inventions are described.

The term "silver powder" as used herein is intended to include silver powder, silver-palladium powder and silver-platinum powder which comprise, as a main component, silver powder used for a conventional conductive paste and, also, contain 85% or more of silver powder. Further, the silver powder in spherical form or flake form is used and it is more preferable to simultaneously use that in both forms.

As for the silver powder in the spherical form, that having an average grain diameter of 2.0 µm or less is used, while, as for the silver powder in the flake form, that having an average grain diameter of from 3.0 to 6.0 µm is used.

The term "glass frit" as used herein is intended to include SiO₂-Bi-Ba-type lead-free non-alkali glass; the glass frit is constituted by a composition comprising, in percentages by weight, 1% or less of alkali metal, from 5 to 30% of Bi₂O₃, from 25 to 45% of SiO₂, from 30 to 40% of BaO, from 5 to 7% of ZnO, from 4 to 7% of Al₂O₃ and from 0.01 to 8% of B₂O₃ and a softening point thereof is from 700 to 900°C. In a case in which a content ratio of Bi₂O₃ is less than 5% and the softening point is less than 700°C, acid resistance, namely, resistance against plating chemicals is deteriorated; therefore, this case is not favorable. Further, in a case in which the content ratio of Bi₂O₃ is 30% or more and the softening point is 900°C or more, when a printed electrically conductive paste is fired, flowability thereof is deteriorated to cause a sintering default; therefore, this case is not favorable, either.

An average grain diameter of the glass frit is preferably 5 µm or less. The reason why the average grain diameter of the glass frit is set to be 5 µm or less is, in one meaning, to prevent a possible clogging of a screen at the time of screen-printing a fine pattern, since, when the grain diameter becomes larger, the flowability is deteriorated.

Next, the term "organic vehicle" as used herein is intended to include a vehicle in which any one of cellulose ethers such as methyl cellulose, ethyl cellulose, carboxymethyl cellulose, oxyethyl cellulose, benzyl cellulose and propyl cellulose is dissolved in any one of organic solvents such as terpineol, butyl carbitol acetate and ethyl carbitol acetate, another vehicle in which any one of acrylic resins such as methyl (meth) acrylate, ethyl (meth)acrylate, butyl (meth)acrylate and 2-hydroxyethyl methacrylate is dissolved in any one of organic solvents such as methyl ethyl ketone, terpineol, butyl carbitol acetate and ethyl carbitol acetate, and rosin-type resins such as hydrogenated rosins, polymerized rosins and rosin esters. The binder resin is dissolved in any one of the aforementioned organic solvents and the resultant solution having from 6 to 10% by weight of binder resin is used.

The electrically conductive paste according to the present invention has a composition comprising, based on the weight of the paste, from 70 to 80% by weight of silver powder, from 0.3 to 2% by weight of palladium powder, from 0.5 to 1.5% by weight of copper powder, from 2 to 5% by weight of glass frit, from 1 to 5% by weight of binder resin such as ethyl cellulose and from 15 to 25% by weight of organic solvent such as terpineol.

The electrically conductive paste according to the present invention is produced by firstly pre-mixing the aforementioned components by a mixer such as a kneader and, then, kneading by a 3-roll mill.

As for a specific production example, firstly, fine silver power, palladium powder and copper powder and a glass frit having an average grain diameter of 5 µm or less are added with an organic vehicle in which a binder resin such as ethyl cellulose is dissolved in an organic solvent such as terpineol and the resultant mixture is pre-mixed by a powerful mixer such as a kneader. Next, the thus-pre-mixed mixture is transferred to a 3-roll mill and kneaded there at room temperature, to thereby obtain a paste. Further, in order to allow the paste to have a desired viscosity, an organic vehicle is added or an organic solvent such as terpineol or butyl carbitol is added during such kneading by the 3-roll mill.

According to the present invention, by adding copper in the aforementioned range, solder can be prevented from being diffused into a silver film layer when soldering is performed. Copper to be added is not limited to metal powder and copper oxide is permissible. An amount thereof to be added is, based on the weight of silver contained in the paste, from 0.5 to 3% by weight in terms of metal copper. When the amount of copper to be added is less than 0.5% by weight, a satisfactory result can not be obtained, while, even when the amount thereof is 3% by weight or more, the effect is not much changed.

Further, according to the present invention, other than silver powder, palladium powder is added as an electrically conductive component. Such addition of palladium powder has an effect of preventing silver from being sulfurated by a sulfur-based gas in the air. An amount of the palladium powder to be added is, based on silver, preferably from 0.3 to 2% by weight. When the amount of the palladium powder to be added is less than 0.3% by weight, a sulfuration resistance effect is not much performed, while, even when the amount thereof is over 2% by weight, the effect is not much changed; therefore, this is not favorable from an economical standpoint.

The electrically conductive paste according to the present invention is ordinarily printed on an alumina substrate in predetermined form by a screen print method, dried to the touch at a temperature of from 120 to 150°C for from 10 to 20 minutes, and, then, fired at from 800 to 900°C for a peak time of from 7 to 10 minutes in a belt-type firing furnace.

Further, the electrically conductive paste is printed and dried to the touch, a thick-film resistance body paste is printed on the thus-dried paste, dried to the touch and, then, is simultaneously fired together with the resistance body layer. On this occasion, same SiO₂-Bi-Ba-type lead-free non-alkali glass as the glass frit used in the electrically conductive paste according to the present invention is preferably used as binder glass of the resistance body.

By simultaneously printing and, thereafter, firing the electrically conductive paste according to the present invention and the thick-film resistance paste, a work process can advantageously be shortened and, further, a lead-less resistor can be provided.

Hereinafter, the present invention is specifically described with reference to examples. However, it should not be construed in any way that the present invention is limited thereto.

### (Example 7)

20 parts by weight of silver powder (average grain diameter: 1.1 µm), 0.3 part by weight of copper powder, 0.6 part by weight of glass frit (comprising 10% by weight of Bi₂O₃, 39% by weight of SiO₂, 31% by weight of BaO, 6% by weight of ZnO, 6% by weight of Al₂O₃ and 0.5% by weight of B₂O₃), 0.1 part by weight of palladium powder and 5 parts by weight of a 6% by weight terpineol solution of ethyl cellulose were allowed to pass through a ceramic 3-roll mill for the predetermined number of times for being sufficiently dispersed and, then, a viscosity of such dispersion was adjusted to obtain an electrically conductive paste.

The thus-obtained electrically conductive paste was screen-printed on an alumina substrate in square form having a side of 55 mm, dried to the touch at 120°C for 15 minutes and, then, fired for 60 minutes in a belt-type electric furnace under a condition set to be a peak temperature of 850°C for 10 minutes to form an electrode pattern having a width of 2 mm and a length of 6 mm on the alumina substrate and the resultant article was allowed to be a test piece.

One of the thus-prepared test pieces was dipped in an Ag-Sn-Pb solder melting bath held at 230°C for 5 seconds, pulled up and, then, solderability of the resultant test piece was examined to find, as a result, 95% of wettability.

Besides, another test piece was prepared and, then, one droplet of an aqueous 0.2% ammonium sulfide solution was dropped on the electrode pattern thereof and, after 5 minutes has passed, a surface of the electrode pattern was observed by a naked eye to find, as a result, a slight change into yellow.

Further, still another test piece was dipped in a 5% sulfuric acid solution at 50°C for 5 hours in order to evaluate plating solution resistance and, as a result, neither of change of color of the surface of the electrode nor separation from an alumina substrate was noticed.

### (Example 8)

16 parts by weight of spherical silver powder (average grain diameter: 1.1 µm), 4 parts by weight of silver powder in flake form (average grain diameter: 4.7 µm), 0.3 part by weight of copper powder, 0. 6 part by weight of glass frit (comprising 10% by weight of Bi₂O₃, 39% by weight of SiO₂, 31% by weight of BaO, 6% by weight of ZnO, 6% by weight of Al₂O₃ and 0.5% by weight of B₂O₃), 0.1 part by weight of palladium powder and 5 parts by weight of a 6% by weight terpineol solution of ethyl cellulose were allowed to pass through a ceramic 3-roll mill for the predetermined number of times for being sufficiently dispersed and, then, a viscosity of such dispersion was adjusted to obtain an electrically conductive paste.

The thus-obtained electrically conductive paste was screen-printed on an alumina substrate in square form having a side of 55 mm, dried to the touch at 120°C for 15 minutes and, then, fired for 60 minutes in a belt-type electric furnace under a condition set to be a peak temperature of 850°C for 10 minutes to form an electrode pattern having a width of 2 mm and a length of 6 mm on the alumina substrate and the resultant article was allowed to be a test piece.

One of the thus-prepared test pieces was dipped in an Ag-Sn-Pb solder melting bath held at 230°C for 5 seconds, pulled up and, then, solderability of the resultant test piece was examined to find, as a result, 95% of wettability.

Besides, another test piece was prepared and, then, one droplet of an aqueous 0.2% ammonium sulfide solution was dropped on the electrode pattern thereof and, after 5 minutes has passed, a surface of the electrode pattern was observed by a naked eye to find, as a result, a slight change into yellow.

Further, still another test piece was dipped in a 5% sulfuric acid solution at 50°C for 5 hours in order to evaluate plating solution resistance and, as a result, neither of change of color of the surface of the electrode nor separation from an alumina substrate was noticed.

### (Example 9)

18 parts by weight of spherical silver powder (average grain diameter: 0.9 µm), 2 parts by weight of silver powder in flake form (average grain diameter: 4.0 µm), 0.2 part by weight of copper powder, 0. 5 part by weight of glass frit (comprising 15% by weight of Bi₂O₃, 44% by weight of SiO₂, 31% by weight of BaO, 6% by weight of ZnO, 6% by weight of Al₂O₃ and 0.5% by weight of B₂O₃), 0.1 part by weight of palladium powder and 5 parts by weight of a 6% by weight terpineol solution of ethyl cellulose were allowed to pass through a ceramic 3-roll mill for the predetermined number of times for being sufficiently dispersed and, then, a viscosity of such dispersion was adjusted to obtain an electrically conductive paste.

The thus-obtained electrically conductive paste was screen-printed on an alumina substrate in square form having a side of 55 mm, dried to the touch at 120°C for 15 minutes and, then, fired for 60 minutes in a belt-type electric furnace under a condition set to be a peak temperature of 850°C for 10 minutes to form an electrode pattern having a width of 2 mm and a length of 6 mm on the alumina substrate and the resultant article was allowed to be a test piece.

One of the thus-prepared test pieces was dipped in an Ag-Sn-Pb solder melting bath held at 230°C for 5 seconds, pulled up and, then, solderability of the resultant test piece was examined to find, as a result, 95% of wettability.

Besides, another test piece was prepared and, then, one droplet of an aqueous 0.2% ammonium sulfide solution was dropped on the electrode pattern thereof and, after 5 minutes has passed, a surface of the electrode pattern was observed by a naked eye to find, as a result, a slight change into yellow.

Further, still another test piece was dipped in a 5% sulfuric acid solution at 50°C for 5 hours in order to evaluate plating solution resistance and, as a result, neither of change of color of the surface of the electrode nor separation from an alumina substrate was noticed.

### (Comparative Example 3)

69 parts by weight of spherical silver powder (average grain diameter: 1.1 µm), 1 part by weight of copper powder, 3.9 parts by weight of glass frit (comprising 50% by weight of PbO, 35% by weight of SiO₂, 4% by weight of ZrO₂, 3% by weight of TiO₂, 2% by weight of Li₂O and 6% by weight of B₂O₃) and 26.1 parts by weight of a 6% by weight terpineol solution of ethyl cellulose were allowed to pass through a ceramic 3-roll mill for the predetermined number of times for being sufficiently dispersed and, then, a viscosity of such dispersion was adjusted to obtain an electrically conductive paste.

The thus-obtained electrically conductive paste was screen-printed on an alumina substrate in square form having a side of 55 mm, dried to the touch at 120°C for 15 minutes and, then, fired for 60 minutes in a belt-type electric furnace under a condition set to be a peak temperature of 850°C for 10 minutes to form an electrode pattern having a width of 2 mm and a length of 6 mm on the alumina substrate and the resultant article was allowed to be a test piece.

One of the thus-prepared test pieces was dipped in an Ag-Sn-Pb solder melting bath held at 230°C for 5 seconds, pulled up and, then, solderability of the resultant test piece was examined to find, as a result, 60% of wettability.

Besides, another test piece was prepared and, then, one droplet of an aqueous 0.2% ammonium sulfide solution was dropped on the electrode pattern thereof and, after 5 minutes has passed, a surface of the electrode pattern was observed by a naked eye to find, as a result, a slight change into brown.

Further, still another test piece was dipped in a 5% sulfuric acid solution at 50°C for 5 hours in order to evaluate plating solution resistance and, as a result, neither of change of color of the surface of the electrode nor separation from an alumina substrate was noticed.

### (Comparative Example 4)

69 parts by weight of spherical silver powder (average grain diameter: 1.1 µm), 1 part by weight of palladium powder, 3.9 parts by weight of glass frit (comprising 50% by weight of PbO, 35% by weight of SiO₂, 4% by weight of ZrO₂, 3% by weight of TiO₂, 2% by weight of Li₂O and 6% by weight of B₂O₃) and 26.1 parts by weight of a 6% by weight terpineol solution of ethyl cellulose were allowed to pass through a ceramic 3-roll mill for the predetermined number of times for being sufficiently dispersed and, then, a viscosity of such dispersion was adjusted to obtain an electrically conductive paste.

The thus-obtained electrically conductive paste was screen-printed on an alumina substrate in square form having a side of 55 mm, dried to the touch at 120°C for 15 minutes and, then, fired for 60 minutes in a belt-type electric furnace under a condition set to be a peak temperature of 850°C for 10 minutes to form an electrode pattern having a width of 2 mm and a length of 6 mm on the alumina substrate and the resultant article was allowed to be a test piece.

One of the thus-prepared test pieces was dipped in an Ag-Sn-Pb solder melting bath held at 230°C for 5 seconds, pulled up and, then, solderability of the resultant test piece was examined to find, as a result, 50% of wettability.

Besides, another test piece was prepared and, then, one droplet of an aqueous 0.2% ammonium sulfide solution was dropped on the electrode pattern thereof and, after 5 minutes has passed, a surface of the electrode pattern was observed by a naked eye to find, as a result, a change into yellow.

Further, still another test piece was dipped in a 5% sulfuric acid solution at 50°C for 5 hours in order to evaluate plating solution resistance and, as a result, neither of change of color of the surface of the electrode nor separation from an alumina substrate was noticed.

As has been described above, when the electrically conductive paste according to these inventions is used as an electrode of a thick-film chip resistor, while appropriately selecting and, then, using a composition, an amount to be compounded and electrically conductive material of a bismuth-type glass which is excellent in acid resistance and does not contain PbO as a glass frit, an electrode film provided with sulfide resistance, plating solution resistance and excellent soldering characteristics can be formed. Since the electrically conductive paste of these inventions is capable of being simultaneously fired together with ruthenium oxide-type resistance paste, a substantial shortening of the process is made possible and rationalization of production can be attempted. Moreover, since the glass frit does not contain PbO, it is effective also from the standpoint of environmental protection.

### INDUSTRIAL APPLICABILITY

As has been described above, a resistor according to the present invention and a glass paste to be used therein are effective toward realization of lead-free industry.

## Claims

1. A resistor, comprising a substrate, a resistance body, an electrode connected to the resistance body and a precoat covering the resistance body, being **characterized by** using a lead-free thick-film resistance body paste in which the resistance body is a thick-film resistance body paste comprising, as main components, electrically conductive powder, a glass frit and an organic vehicle, wherein the glass frit is constituted by a composition comprising, in percentages by weight, 1% or less of alkali metal, from 10 to 30% of Bi₂O₃, from 25 to 40% of SiO₂, from 30 to 40% of BaO, from 5 to 7% of ZnO, from 4 to 7% of Al₂O₃ and from 0.01 to 8% of B₂O₃.

2. The resistor as set forth in Claim 1, being **characterized by** using a thick-film resistance body paste in which the electrically conductive powder is RuO₂ and/or Bi₂Ru₂O₇₋ₓ.

3. The resistor as set forth in Claim 1, being **characterized by** using a thick-film resistance body paste in which the electrically conductive powder is at least one of RuO₂ and Bi₂Ru₂O₇₋ₓ and one compound or 2 compounds or more selected from among Ru (OH)₄, SrRuO₃, BaRuO₃, CaRuO₃, LiRuO₃, Bi₂Ir₂O₇, Bi_{1.5}In_{0.5}Ru₂O₇, NdBiRu₂O₇ and BiInRu₂O₇.

4. The resistor as set forth in Claim 1, being **characterized by** using a thick-film resistance body paste in which a softening point of the glass frit is from 700 to 900°C.

5. The resistor as set forth in Claim 1, being **characterized by** forming a precoat covering layer by lead-free glass comprising, based on a glass composition analysis in accordance with an atomic absorption method (AA method), 1% by weight or less of alkali metal and, at least, from 25 to 40% by weight of silica, from 30 to 43% by weight of BaO, from 5 to 7% by weight of ZnO, from 4 to 7% by weight of Al₂O₃ and from 10 to 30% by weight of Bi₂O₃.

6. The resistor as set forth in Claim 5, being **characterized by** having an interdiffusion layer at least at an interface between the electrode and the resistance body, or between the resistance body and the precoat covering layer.

7. The resistor as set forth in Claim 5 or 6, being **characterized in that** the electrode, the resistance body and the precoat covering layer are continuously formed on the substrate of an insulating body and, then, fired all together at a time.

8. The resistor as set forth in Claim 5 or 6, being **characterized in that** RuO₂/Bi₂Ru₂O₇-type electrically conductive material is used at least in the resistance body.

9. The resistor as set forth in Claim 5 or 6, being **characterized in that**, at the time of forming an end-face electrode of the resistor, a change of a glass composition of the precoat covering layer is 5% or less.

10. The resistor as set forth in Claim 5 or 6, being **characterized in that** a content of bismuth element in the lead-free bismuth-type glass is in a relation of 25% by weight>optimal value>15% by weight in a composition of the glass.

11. The resistor as set forth in Claim 1, being **characterized in that** the substrate is allowed tobe a thermally resistant insulating substrate, and a surface thereof has the electrode in which lead-free bismuth-type glass is allowed to be a binder and the resistance body a part of which overlaps the electrode, wherein the resistance body is constituted by electrically conductive powder comprising ruthenium oxide, bismuth ruthenate or a mixture of ruthenium oxide and bismuth ruthenate, and lead-free bismuth-type binder glass.

12. The resistor as set forth in Claim 11, being **characterized in that** the lead-free bismuth-type binder glass comprises, as main components, SiO₂, BaO, ZnO, Al₂O₃ and Bi₂O₃.

13. The resistor as set forth in Claim 11, being **characterized in that** an electrically conductive material of the electrode in which the lead-free bismuth-type glass is allowed to be the binder comprises one element or two elements or more selected from among gold, silver, platinum, palladium, an alloy thereof and a mixture thereof.

14. The resistor as set forth in Claim 11, being **characterized in that** the resistance body is covered by a lead-free bismuth-type glass film comprising, as main components, SiO₂, BaO, ZnO, Al₂O₃ and Bi₂O₃.

15. The resistor as set forth in Claim 1, being **characterized in that** the electrode is formedby a lead-free electrically conductive paste which is an electrically conductive paste comprising, as main components, silver powder, a glass frit and an organic vehicle, wherein the glass frit is constituted by a composition comprising, in percentages by weight, 1% or less of alkali metal, from 5 to 30% of Bi₂O₃, from 25 to 45% of SiO₂, from 30 to 40% of BaO, from 5 to 7% of ZnO, from 4 to 7% of Al₂O₃ and from 0.01 to 8% of B₂O₃.

16. The resistor as set forth in Claim 1, being **characterized in that** the electrode is formed by a lead-free electrically conductive paste which is an electrically conductive paste comprising, as main components, silver powder, palladium powder, copper powder, a glass frit and an organic vehicle, wherein the glass frit is constituted by a composition comprising, in percentages by weight, 1% or less of alkali metal, from 5 to 30% of Bi₂O₃, from 25 to 45% of SiO₂, from 30 to 40% of BaO, from 5 to 7% of ZnO, from 4 to 7% of Al₂O₃ and from 0.01 to 8% of B₂O₃.

17. The resistor as set forth in Claim 15 or 16, being **characterized by** being formed by an electrically conductive paste in which the silver powder comprises spherical powder having an average grain diameter of 2.0 µm or less and flakes having an average grain diameter of from 3.0 to 6.0 µm.

18. The resistor as set forth in Claim 15 or 16, being **characterized by** being formed by an electrically conductive paste in which a softening point of the glass frit is from 700 to 900°C.

19. A lead-free thick-film resistance body paste, which is a thick-film resistance body paste comprising, as main components, electrically conductive powder, a glass frit and an organic vehicle for use in forming a resistance body for a resistor comprising a substrate, a resistance body, an electrode connected to the resistance body and a precoat covering the resistance body, being **characterized in that** the glass frit is constituted by a composition comprising, in percentages by weight, 1% or less of alkali metal, from 10 to 30% of Bi₂O₃, from 25 to 45% of SiO₂, from 30 to 40% of BaO, from 5 to 7% of ZnO, from 4 to 7% of Al₂O₃ and from 0.01 to 8% of B₂O₃.

20. Lead-free glass, which is glass for use in forming a precoat-covering layer of a resistor comprising a substrate, a resistance body, an electrode connected to the resistance body and a precoat covering the resistance body, being **characterized by** comprising, based on a glass composition analysis in accordance with an atomic absorption method (AA method), 1% by weight or less of alkali metal, at least, from 25 to 40% by weight of silica, from 30 to 43% by weight of BaO, from 5 to 7% by weight of ZnO, from 4 to 7% by weight of Al₂O₃ and from 10 to 30% by weight of Bi₂O₃.

21. Lead-free bismuth-type binder glass, comprising ruthenium oxide, bismuth ruthenate or a mixture of ruthenium oxide and bismuth ruthenate, for use in forming a resistance body a part of which overlaps an electrode in which lead-free bismuth-type glass is allowed to be a binder on a surface of a substrate, which is allowed to be a thermally resistant insulating substrate, of a resistor comprising the substrate, the resistance body, the electrode connected to the resistance body and a precoat covering the resistance body.

22. A lead-free electrically conductive paste, which is an electrically conductive paste comprising, as main components, silver powder, a glass frit and an organic vehicle for use in forming an electrode of a resistor comprising a substrate, a resistance body, the electrode connected to the resistance body and a precoat covering the resistance body, being **characterized in that** the glass frit is constituted by a composition comprising, in percentages by weight, 1% or less of alkali metal, from 5 to 30% of Bi₂O₃, from 25 to 45% of SiO₂, from 30 to 40% of BaO, from 5 to 7% of ZnO, from 4 to 7% of Al₂O₃ and from 0.01 to 8% of B₂O₃.

23. A lead-free electrically conductive paste, which is an electrically conductive paste comprising, as main components, silver powder, palladium powder, copper powder, a glass frit and an organic vehicle for use in forming an electrode of a resistor comprising a substrate, a resistance body, the electrode connected to the resistance body and a precoat covering the resistance body, wherein the glass frit is constituted by a composition comprising, in percentages by weight, 1% or less of alkali metal, from 5 to 30% of Bi₂O₃, from 25 to 45% of SiO₂, from 30 to 40% of BaO, from 5 to 7% of ZnO, from 4 to 7% of Al₂O₃ and from 0.01 to 8% of B₂O₃.
